# EUROPEAN PATENT APPLICATION

(11) **EP 2 000 883 A2**
(43) Date of publication of application: **10.12.2008**
(21) Application number: 08156853.7
(22) Date of filing: 23.05.2008
(51) Int. Cl.: G06F 1/32

(54) **Information processing apparatus and method of controlling the same**

(30) Priority: 31.05.2007 JP 2007145272
(71) Applicant: Kabushiki Kaisha Toshiba, Minato-ku Tokyo 105-8001 (JP)
(72) Inventor: Fukushima, Kazuya c/o Toshiba Corporation, I.P.D., Tokyo 105-8001 (JP)
(74) Representative: Henkel, Feiler & Hänzel

(57) **Abstract**

An information processing apparatus has a radio communications unit, and includes a discriminating unit configured to discriminate whether or not the apparatus is in a predetermined state, and a control unit configured to lower the communication speed of the radio communications unit and shift the first mode to the second mode if it is discriminated by the discriminating unit that the apparatus is in the predetermined state in the first node.

## Description

The present invention relates to an information processing apparatus such as a personal computer and, more particularly, to an information processing apparatus having a radio connection function and a method of controlling the information processing apparatus.

In general, in a mobile device for radio communications, electric power saving is required to extend a continuous operation time of a battery. For example, Jpn. Pat. Appln. KOKAI Publication 2000-106605 discloses that a communication speed is varied in accordance with a remaining battery quantity and the communications can be thereby continued. In other words, when the remaining battery quantity is reduced, the communication speed is lowered, the power consumption is reduced and weakening of the battery is delayed.

According to this technology, however, a problem arises that electric power saving cannot be performed if the remaining battery quantity is not varied.

The present invention has been accomplished in consideration of the above-described circumstances. The object of the present invention is to provide an information processing apparatus, capable of limiting a communication speed to the lowest necessary communication speed and saving the electric power even if the influences are not caused by lowering the computer communication quality.

To achieve this object, an aspect of the present invention is an information processing apparatus having a radio communications unit, and having a first mode in which communications are established at a first communication speed and a second mode in which communications are established at a second communication speed lower than the first communication speed. The apparatus comprises a discriminating unit configured to discriminate whether or not the apparatus is in a predetermined state, and a control unit configured to lower the communication speed of the radio communications unit and shift the first mode to the second mode if it is discriminated by the discriminating unit that the apparatus is in the predetermined state in the first mode.

Another aspect of the present invention is a control method employed in an information processing apparatus having a radio communications unit, and having a first mode in which communications are established at a first communication speed and a second mode in which communications are established at a second communication speed lower than the first communication speed. The method comprises discriminating whether or not the apparatus is in a predetermined state; and lowering the communication speed of the radio communications unit and shifting the first mode to the second mode if it is discriminated by the discriminating unit that the apparatus is in the predetermined state in the first mode.

According to the present invention, a communication speed can be limited to the lowest necessary communication speed and the electric power can be saved when the computer is in a standby status.

The invention can be more fully understood from the following detailed description when taken in conjunction with the accompanying drawings, in which:
FIG. 1 is a perspective view showing a schematic appearance of a computer according to an embodiment of the present invention;
FIG. 2 is a block diagram showing an example of a system configuration of the computer according to the embodiment;
FIG. 3 is a flowchart showing a control method for the computer according to the embodiment;
FIG. 4 is a block diagram showing a function configuration and the like of 3G application according to the embodiment; and
FIG. 5 is a table showing an example of a communication speed in each communication systems.

An embodiment of the present invention is described with reference to the accompanying drawings.

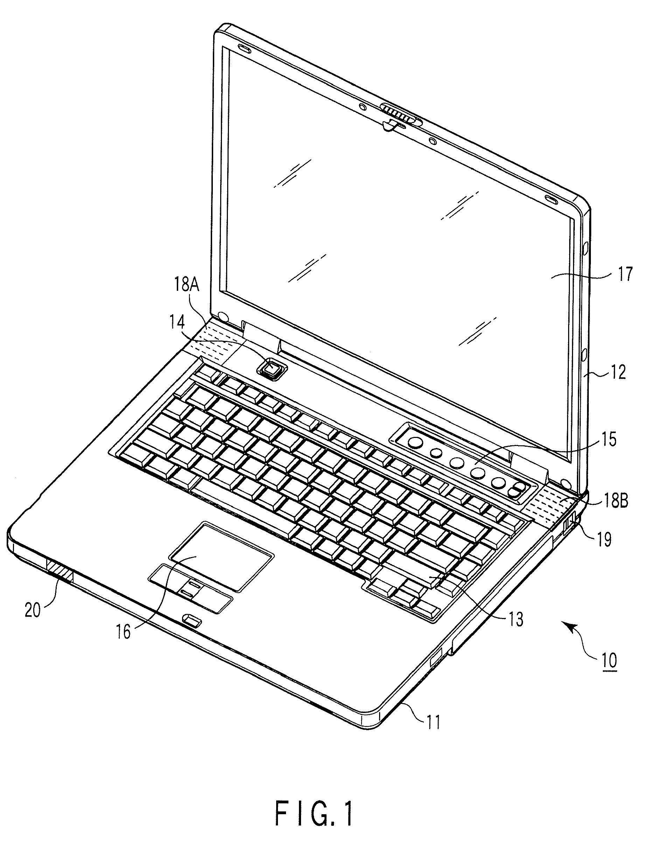

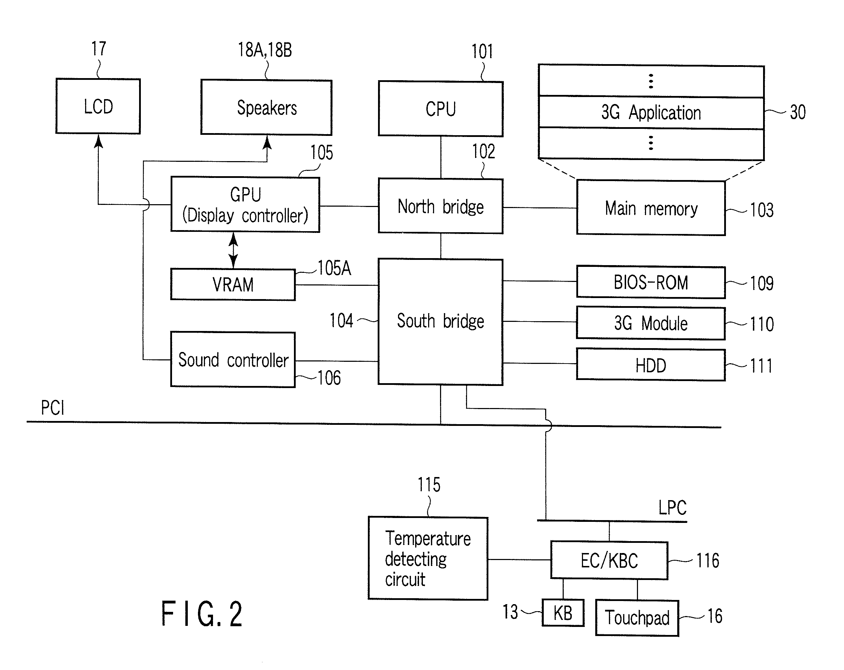

First, a configuration of an information processing apparatus according to the embodiment of the present invention is described with reference to FIG. 1 and FIG. 2. The information processing apparatus is implemented as, for example, a notebook-type personal computer 10.

FIG. 1 is a perspective view showing the notebook-type personal computer 10 with a display unit thereof opened.

The computer 10 is composed of a main body 11 and a display unit 12. A display device composed of a TFT-LCD (Thin Film Transistor Liquid Crystal Display) 17 is embedded in the display unit 12. A display screen of the LCD 17 is located approximately in the center of the display unit 12.

The display unit 12 is attached to the main body 11 so as to freely pivot between an opened position and a closed position. The main body 11 has a housing shaped in a thin box, and comprises on the top face thereof a keyboard 13, a power button 14 for power-on/power-off of the computer 10, an input operation panel 15, a touch pad 16, speakers 18A, 18B and the like.

The input operation panel 15 is an input unit which inputs an event corresponding to a pushed button, and comprises a plurality of buttons for activating a plurality of functions.

On a front surface of the main body 11, a remote controller unit interface 20 for executing communications with a remote controller unit which controls a TV function of the computer 10 is provided. The remote controller unit interface 20 is composed of an infrared signal receiver and the like.

Next, a system configuration of the computer 10 is described with reference to FIG. 2.

As shown in FIG. 2, the computer 10 comprises a CPU 101, a north bridge 102, a main memory 103, a south bridge 104, a graphics processing controller (GPU) 105, a video memory (VRAM) 105A, a sound controller 106, a BIOS-ROM 109, a 3G module 110, a hard disk drive (HDD) 111, an embedded controller/keyboard controller IC (EC/KBC) 116, a temperature detecting circuit 115 which detects temperature of the 3G module 110, and the like.

The CPU 101 is a processor controlling the operations of the computer 10. The CPU 101 executes the operating system, a 3G operation 30, and the like loaded on the main memory 103 by the hard disk drive (HDD) 111. The CPU 101 also executes the BIOS (Basic Input Output System) stored in the BIOS-ROM 109. The BIOS is a program for the hardware control.

The north bridge 102 is a bridge device which makes a connection between a local bus of the CPU 101 and the south bridge 104. A memory controller which controls an access of the main memory 103 is also built in the north bridge 102. The north bridge 102 also has a function of executing communications with the GPU 105 via a serial bus based on the PCI Express standard, or the like.

The GPU 105 is a display controller which controls the LCD 17 employed as a display monitor of the computer 10. A display signal generated by the GPU 105 is transmitted to the LCD 17.

The south bridge 104 controls each device on an LPC (Low Pin Count) bus and each device on a PCI (Peripheral Component Interconnect) bus. In addition, an IDE (Integrated Drive Electronics) controller for controlling the HDD 111 is built in the south bridge 104. Moreover, the south bridge 104 also has a function of executing communications with the sound controller 106.

The sound controller 106 is a sound source device, which outputs audio data to be reproduced to the speakers 18A, 18B.

The embedded controller/keyboard controller IC (EC/KBC) 116 is a one-chip microcomputer on which an embedded controller for power supply management, and a keyboard controller for controlling the keyboard (KB) 13, the touch pad 15, the temperature detecting circuit 115 and the like are integrated. The embedded controller/keyboard controller IC (EC/KBC) 116 has a function of power-on/power-off of the computer 10, in cooperation with the power supply circuit 120, in accordance with the user's operation of the power button 14. Moreover, the embedded controller/keyboard controller IC (EC/KBC) 116 has a function of executing communications with the remote controller unit interface 20.

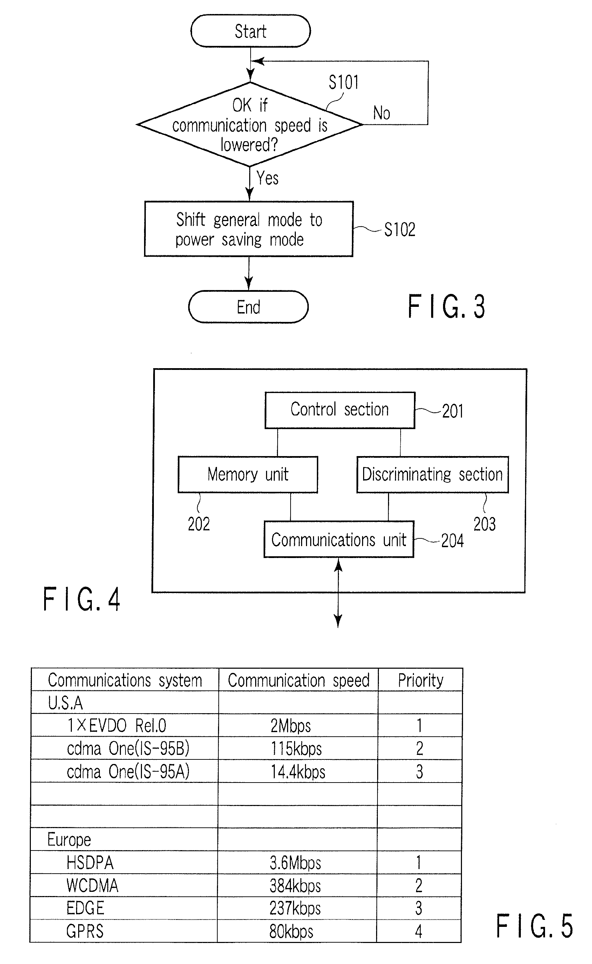

Next, FIG. 4 is a block diagram showing a function configuration of the 3G application and the like.

The 3G application 30 comprises a control section 201, a memory unit 202, a discriminating section 203, a communications unit 204 and the like. The control section 201 is the CPU 101 or the like, which controls the 3G application 30. The memory unit 202 is a configuration memory or the like, which stores a value of a communication speed in a general mode (described later) or a power saving mode (described later) and a threshold value of the temperature of the 3G module 110 detected by the temperature detecting circuit 115. The discriminating section 203 discriminates a timing of shifting the general mode to the power saving mode. For example, when the apparatus is in a standby status or the temperature of the 3G module 110 exceeds a predetermined threshold value, the general mode is shifted to the power saving mode. The communications unit 204 executes 3G-standard radio communications. The communications unit 204 is also capable of making a connection to Internet via a 3G communications network.

Next, a control method to which the information processing apparatus according to the embodiment of the present invention is applied is described with reference to FIG. 3. The computer 10 has a function of returning from a wait status (standby or the like) to a general status, by WakeUp from the 3G module 110. The 3G module 110 can also establish communications by itself even when the computer 10 is in a standby status. For example, when a mail of a predetermined keyword is received by the 3G module 110, the computer 10 can be made to wake up by the 3G module 110 and become in the general activation status.

First, it is assumed that the control section 201 of the computer 10 controls communications of the 3G application 30 and the like, in a general mode (described later). The CPU 101 of the computer 10 loads the 3G application 30 to the main memory 103. The discriminating section 203 of the 3G application 30 discriminates whether or not the communication speed can be lowered (block S101). If it is discriminated by the discriminating section 203 that the communication speed can be lowered (YES in block S101), the general mode (power consuming status in which the computer 10 is generally employed) is shifted to the power saving mode (status in which the power consumption is reduced to the lowest level necessary for the communications) (block S102). The "status in which the communication speed may be lowered" is a status in which, for example, the computer 10 is under a standby condition, the temperature of the 3G module 110 is higher than a predetermined threshold value, the communications quality of the 3G module 110 is lower than a predetermined communications quality, or the like.

In block S102, for example, when the general mode is shifted to the power saving mode, priority is set for each communications system as shown in FIG. 5. As for the communications systems for the U.S.A., for example, the priority of 1xEVDO Re1.0 (communication speed at 2 Mbps) is set to 1, the priority of cdmaOne (IS-95B) (communication speed at 115 Kbps) is set to 2, and the priority of cdmaOne (IS-95A) (communication speed at 14.4 Mbps) is set to 3. Then, the general mode is set as 1xEVDO Re1.0 (communication speed at 2 Mbps), and the power saving mode is set as cdmaOne (IS-95B) (communication speed at 115 Kbps) or cdmaOne (IS-95A) (communication speed at 14.4 Mbps). The power consumption is more reduced as the communication speed becomes lower. The electric power can be saved by setting the communication speed to the lowest speed that is necessary for mail confirmation or the like of the 3G module 110, in the standby status or the like of the computer 10 (since the 3G module 110 does not need to establish communications with the base station at any time in the standby status or the like). If the mail or the like received by the 3G module 110 is a mail or the like including a predetermined keyword, the 3G module 110 makes the computer 10 return from WakeUp status and generally activate. When the computer 10 generally activates, the power saving mode is shifted to the general mode, and the communications system is shifted to the general system to establish communications at a high communication speed. In the general mode, a text of the mail is entirely received. The standby status of the computer 10 indicates a status in which the electric power is more saved than in the general operation status of the computer, as represented by the suspend mode, standby mode, pause state, shutdown state and the like.

Even when the temperature of the 3G module 110 is higher than a predetermined temperature, for example, 60°C, the general mode is shifted to the power saving mode to lower the communication speed. By conducting the control in such a manner, the power consumption can be reduced and the temperature can be lower to a temperature at which the 3G module 110 normally operates. Then, the power saving mode may be shifted to the general mode at the time when the temperature is lower to a temperature at which the 3G module 110 normally operates, for example, 45°C. Moreover, the temperature level may be separated to three steps, and threshold values of corresponding temperatures may be set to change the communication mode. For example, the communications mode is changed to 1xEVDO Re1.0 (communication speed at 2 Mbps) of priority 1 at a temperature ranging from 0 to 35°C, cdmaOne (IS-95B) (communication speed at 115 Kbps) of priority 2 at a temperature ranging from 36 to 45°C, and cdmaOne (IS-95A) (communication speed at 14.4 Mbps) of priority 3 at a temperature not lower than 46°C.

In an environment of much communication noise for the reason that the computer 10 is operated, the communications quality becomes deteriorated. In this case, when it is discriminated by monitoring the S/N ratio during the communications that the communications quality becomes deteriorated, the communications can be made stable by shifting the communications mode to the power saving mode and changing the communications system to that of a lower communication speed. The communications quality levels can be separated to three and the communications speed can be changed to the communications speed (communications mode of lower priority) in accordance with the communications quality levels. For example, the communications mode is changed to 1xEVDO Re1.0 (communication speed at 2 Mbps) of priority 1 when the communications quality is a top level, cdmaOne (IS-95B) (communication speed at 115 Kbps) of priority 2 when the communications quality is a second level, and cdmaOne (IS-95A) (communication speed at 14.4 Mbps) of priority 3 when the communications quality is a third level.

Similarly, when it is discriminated that the communications quality has been improved, the communications mode is changed in accordance with the level of the communications quality. For example, the communications quality is improved when the communications are established in cdmaOne (IS-95A) (communication speed at 14.4 Mbps) of priority 3. If the communications quality is the second level, the communications mode is changed to cdmaOne (IS-95B) (communication speed at 115 Kbps) of priority 2.

By employing the present invention, the communication speed can be set to a lowest communication speed that is necessary for the communications and the electric power can be saved if bad influence is not caused by lowering the computer communications quality.

The present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

## Claims

1. An information processing apparatus having a radio communications unit (110), and having a first mode in which communications are established at a first communication speed and a second mode in which communications are established at a second communication speed lower than the first communication speed,
the apparatus **characterized by** comprising:
a discriminating unit (101) configured to discriminate whether or not the apparatus is in a predetermined state; and
a control unit (101) configured to lower the communication speed of the radio communications unit (110) and shift the first mode to the second mode if it is discriminated by the discriminating unit (101) that the apparatus is in the predetermined state in the first mode.

2. The apparatus according to claim 1, **characterized in that** the predetermined state indicates a case where the apparatus is in a standby state.

3. The apparatus according to claim 1, **characterized in that** the predetermined state indicates a case where communications quality of the radio communications unit (110) is deteriorated.

4. The apparatus according to claim 1, **characterized in that** the predetermined state indicates a case where a temperature of the radio communications unit (110) is raised above a predetermined value.

5. The apparatus according to claim 1, **characterized in that** if the predetermined state is varied after the control unit (101) shifts the mode to the second mode, the control unit (101) releases the second mode and shifts the second mode to the first mode.

6. A control method employed in an information processing apparatus having a radio communications unit (110), and having a first mode in which communications are established at a first communication speed and a second mode in which communications are established at a second communication speed lower than the first communication speed,
the method **characterized by** comprising:
discriminating whether or not the apparatus is in a predetermined state; and
lowering the communication speed of the radio communications unit (110) and shifting the first mode to the second mode if it is discriminated by the discriminating unit (101) that the apparatus is in the predetermined state in the first mode.

7. The apparatus according to claim 6, **characterized in that** the predetermined state indicates a case where the apparatus is in a standby state.

8. The apparatus according to claim 6, **characterized in that** the predetermined state indicates a case where communications quality of the radio communications unit (110) is deteriorated.

9. The apparatus according to claim 6, **characterized in that** the predetermined state indicates a case where a temperature of the radio communications unit (110) is raised above a predetermined value.

10. The apparatus according to claim 6, **characterized in that** if the predetermined state is varied after the control unit (101) shifts the mode to the second mode, the control unit (101) releases the second mode and shifts the second mode to the first mode.
